# EUROPEAN PATENT APPLICATION

(11) **EP 3 139 542 A1**
(43) Date of publication of application: **08.03.2017**
(21) Application number: 15184073.3
(22) Date of filing: 07.09.2015
(51) Int. Cl.: H04L 12/26, G08G 5/00, H04B 7/185, H04L 12/24

(54) **MANAGEMENT OF WIRELESS COMMUNICATION LINKS FROM A MOVING PLATFORM**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Health monitoring apparatus (51 - Figure 2, 50, 52, 54) for a communications system (42) of a platform comprising a plurality of systems and/or functions (12) and at least one platform application (14, 16, 18, 20), said communications system being configured to transmit and/or receive data and to effect wireless data communication by means of one of a plurality of supported communications links, wherein said health monitoring apparatus is configured to:
- receive health data from one or more of said communications links, said health data being representative of a current status of respective said one or more of said communications links;
- monitor said received health data for data indicative of one or more predetermined conditions;
- in the event that a predetermined condition is identified, generate report data representative of said predetermined condition; and
- provide said report data to one or more predefined recipients associated with said platform.

## Description

This invention relates generally to an apparatus and method for use in communications and information management and, more particularly, but not necessarily exclusively, to an apparatus and method for use in the management of wireless communications resources from a moving platform.

There are many applications in which it is required to apply a level of management in respect of wireless communications and the management of information, particularly between a moving platform and a remote target, and maintain adequate wireless communications therebetween for safe operation of the moving platform and mission success.

For example, in the case of aerial vehicles and, more particularly, unmanned aerial vehicles (UAVs), there is an ongoing and stringent requirement to maintain an adequate communications link between the aerial vehicle and a ground station, for example, and unexpected loss or degradation of such a communications link can be catastrophic.

A UAS is composed of three main parts, the unmanned air vehicle (UAV), unmanned control station (UCS) and support systems of the UAS (for pre-mission planning). A UAS Mission System may be composed of the following functional components/subsystems: Mission Management, Communications, Vehicle Health, Navigation System, Airspace Integration, Payload and Power Management. Multiple, different dynamic in-mission planners may reside in one or more of the above-mentioned functional components/subsystems. In a typical UAV, a dynamic route planner generates a new route, in real time, when there is a change in the operational environment, e.g. severe weather, pop-up threat, or a change of circumstances, e.g. an emergency, or a dynamic manoeuvre plan is generated to avoid an airborne obstacle. The aim is thus to maintain safety and the survivability of the aircraft by determining a feasible route and/or manoeuvre in real time, while avoiding pop-up, static and dynamic obstacles, for example.

However, the operational environment of moving platforms, at least in some applications, can be particularly challenging from a communications perspective, wherein unplanned events, such as link degradation or failure, new operational constraints, modified orders or changes in mission priorities, may have a profound effect on meeting pre-planned mission objectives during mission execution. Links can be volatile and link quality can significantly change, without prior warning. The quality of the link can change dynamically due to interference, jammers and weather, for example. As a result, a link can become degraded or be lost. Of particular concern in unmanned aircraft systems (UAS), is the loss of the Command and Control (C2) Link. When a C2 link of a UAS is lost, the aircraft continues flying and the pilot at the control station and/or ATC (air traffic control) controller are no longer aware of its state and behaviour. The pilot no longer has the ability to maintain operational control over the aircraft and nearby aircraft could also be in danger of a collision, for example. In addition, the aircraft (e.g. on-board mission management system) itself does not know that it has lost communications with the pilot. In such a case, the designated system(s) on-board the platform needs to be aware of the lost link in order to fly a pre-planned contingency route to an alternate airport/airfield or to return to the original airfield/airport, or to retrace its route to regain connectivity, for example. In addition, the pilot at the unmanned control station (UCS) needs to be aware of the lost link in order to enable the pilot and air traffic controller to proceed with implementing contingency procedures. For example the air traffic controller may be required to clear airspace in response to the lost link. As another example, a C2 link may become severely degraded during a mission, thus the communications link is no longer able to transmit and/or receive the amount of information required for normal operation. As a result, a lost link situation may be declared. It would, therefore, be desirable to provide an apparatus and method for use in a management system of a moving platform, wherein the health of its off-board communications links and communications equipment is used, at least in some cases, to aid in the decision-making with the primary view of maintaining safety of the platform and other platforms in the vicinity, as well as the public, and also maintaining adequate communications.

It is, therefore, an object of at least some aspects of the present invention to address at least one or more of these issues and, in accordance with a first aspect of the invention, there is provided health monitoring apparatus for a communications system of a platform comprising a plurality of systems and/or functions and at least one platform application, said communications system being configured to transmit and/or receive data and to effect wireless data communication by means of one of a plurality of supported communication links, wherein said health monitoring apparatus is configured to:
- receive health data from one or more of said communications links, said health data being representative of a current status of respective said one or more of said communications links;
- monitor said received health data for data indicative of one or more predetermined conditions;
- in the event that a predetermined condition is identified, generate report data representative of said predetermined condition; and
- provide said report data to one or more predefined recipients associated with said platform.

The apparatus may be further configured to use said health data to generate health reports, and provide said health reports periodically to one or more predefined recipients associated with said platform.

The current status of a communications link may comprise a current quality and/or a current health status of communications equipment associated with said platform and/or said communications link.

The predetermined condition may include or comprise a potential or confirmed lost and/or degraded command and control (C2) link, and said report data may include data indicative of said potential or confirmed lost link.

The report data may include data representative of a recovered command and control (C2) link.

The predetermined condition may include or comprise intermittent connectivity for command and control (C2) communications, and said report data includes data indicative of said intermittent connectivity.

In an exemplary embodiment, the apparatus may comprise a link monitoring module configured to monitor a quality of at least one specified communications link and generate report data if said specified communications link is determined to be lost and/or degraded for a predetermined period of time.

In an exemplary embodiment, the apparatus may be configured to use a set of rules or policy to determine, in response to said received health data, an action to be taken in respect of a communications link and/or communications equipment associated therewith.

The apparatus may comprise a message routing module configured to route messages for off-board transmission via one or more communications links, and generate report data if it determines that there are no adequate communications links available for such off-board transmission. In this case, the message routing module may be configured to generate report data if it determines that there are no adequate communications links for off-board transmission of messages categorised as safety-critical and/or mission-critical.

The apparatus may be configured to transmit said report data to a Human Machine Interface (HMI) system of said moving platform and/or one or more systems associated with said platform.

In accordance with another aspect of the present information, there is provided a management system for a moving platform comprising a plurality of systems and/or functions and at least one platform application, and a communications system configured to transmit and/or receive data and to effect wireless data communication by means of one of a plurality of supported communication links, the system further comprising health monitoring apparatus configured to:
- receive health data from one or more of said communications links, said health data being representative of a current status of respective said one or more of said communications links;
- monitor said received health data for data indicative of one or more predetermined conditions;
- in the event that a predetermined condition is identified, generate report data representative of said predetermined condition; and
- provide said report data to one or more predefined recipients associated with said platform.

In accordance with yet another aspect of the present invention, there is provided a health monitoring method for use with a communications system of a platform comprising a plurality of systems and/or functions and at least one platform application, said communications system being configured to transmit and/or receive data and to effect wireless data communication by means of one of a plurality of supported communication links, wherein said health monitoring method comprises:
- receiving health data from one or more of said communications links, said health data being representative of a current status of respective said one or more of said communications links;
- monitoring said received health data for data indicative of one or more predetermined conditions;
- in the event that a predetermined condition is identified, generating report data representative of said predetermined condition; and
- provide said report data to one or more predefined recipients associated with said platform.

These and other aspects of the present invention will be apparent from the following specific description in which embodiments of the present invention are described, by way of examples only, and with reference to the accompanying drawings, in which:
Figure 1 is a schematic block diagram illustrating a moving platform system, including apparatus according to an exemplary embodiment of the present invention;
Figure 2 is a schematic block diagram illustrating some principal features of the moving platform system of Figure 1 in more detail;
Figure 3A is a schematic block diagram illustrating the data connections of an intelligent communication management system, including apparatus according to an exemplary embodiment of the present invention, in an air-based system;
Figure 3B is a schematic block diagram illustrating the data connections of an intelligent communication management system, including apparatus according to an exemplary embodiment of the present invention, in a ground-based system/airborne control station;
Figure 4 is a schematic block diagram illustrating a communications executive function according to an exemplary embodiment of the present invention; and
Figure 5 is a schematic block diagram illustrating a health monitoring apparatus according to an exemplary embodiment of the present invention.

Exemplary embodiments of the present invention provide a health monitoring module within an intelligent communications management system so as to provide a degree of situational awareness to platform systems, including higher-level decision makers, about the health of the communications links and communications equipment, in order to maintain safe operations when an unexpected link degradation or failure occurs, or when there is intermittent communications on the safety-critical link.

A health monitoring module according to an exemplary embodiment of the invention, may be configured, for example, to monitor the health of the C2 (Command and Control) link and, upon detection of a lost C2 link, alert key stakeholders, such as the mission management system and the communications operator, so that appropriate action can be taken. If the C2 link is subsequently re-established, the health monitoring function may be configured to inform the stakeholders accordingly. In addition, the health monitoring function may be configured to report to those stakeholders, any faults in relation to the communications equipment, e.g. a hardware fault in relation to a specified link.

Traditionally, all aspects of communications, such as multiple, different communications links/radios, reside within the communications system. Each of the communications links/radios is an independent system and usually dedicated to transmitting specific messages. If, for example, an unexpected event occurs, such as a link failure, a change in mission priorities and a pop-up threat, the system is unable to adapt and respond accordingly to maintain adequate communications. The communications system is usually a dedicated system without much interaction, if any, with other platform systems and platform applications. For example, when a C2 link of a UAS is lost, the aircraft continues flying and the pilot at the control station loses situational awareness of the air vehicle and no longer has the ability to maintain operational control over it. Therefore, it would be desirable to have a communications system that identifies a lost link and alerts the designated platform system(s), so that the platform takes the necessary action to maintain safe operation. In contrast, in aspects of the present invention, it is recognised that all functions/systems on a platform (e.g. mission management, communications, vehicle health management) work in concert to achieve mission objectives and to maintain integrity of the platform. For example, in accordance with exemplary embodiments of the present invention, health monitoring and reporting can be used to ensure that communications failure will not lead to a catastrophe. Thus, and as will be described in more detail later, the communications system is concerned with low-level decision making, i.e. day-to-day running and decisions, as well as monitoring the health of all communications links and communications equipment. However, if it is unable to resolve a communications issue or it has detected that, for example, communications between the air vehicle and the pilot at the control station has failed or is exhibiting intermittent behaviour, then higher-level decision makers may be invoked, based on health data obtained using apparatus according to exemplary embodiments of the present invention.

The operational environment of a moving platform, in many different applications, comprises a plurality of nodes (e.g. fixed/mobile control station, manned and/or unmanned air vehicles) interacting with each other via different networks, exchanging, for example, Command and Control (C2), maintaining situational/environmental awareness, and cooperatively working together. In general, a node has multiple data links/radios to enable it to interact with other nodes via different networks, as required.

In the following description of the drawings, a communications management system, including apparatus according to an exemplary embodiment of the invention will be described in relation to a UAV system. However, it is to be understood that the present invention is not necessarily intended to be limited in this regard and, indeed, finds application in many other types of mobile vehicle and fixed infrastructure systems in which it is required to manage communications in an intelligent manner and, for the avoidance of doubt, this would include manned and unmanned road and sea-going vehicles, ground- and airborne-control based infrastructure, as well as manned aerial vehicles.

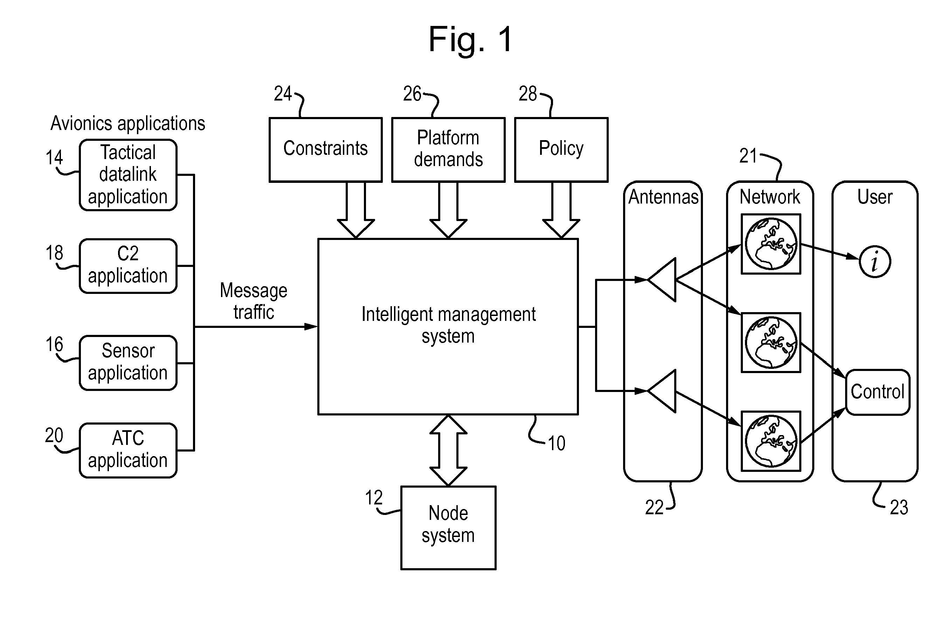

Referring to Figure 1 of the drawings, an intelligent management module 10, including a health monitor 51 according to an exemplary embodiment of an aspect of the present invention, is illustrated schematically at the centre of a typical UAV system. The UAV comprises a plurality of systems/subsystems, including communications, navigation system, prognostics and health, etc. Thus, in the schematic diagram of Figure 1, the intelligent communications management module 10 is incorporated in a first node and depicted as being communicably coupled to other parts 12 of the vehicle. It can be seen from the diagram that two-way data communication is provided between the rest of the vehicle 12 and the intelligent management module 10. The node system 12 may comprise a plurality of systems/subsystems, possibly including, but not necessarily limited to, a prognostics and health systems, a navigation system, a control authority, e.g. pilot or an on-board authority with executive decision functionality, a utilities management systems, defensive aids systems, data transfer and recording systems, and an HMI (Human Machine Interface) systems. Any and all of these systems are configured to provide information, such as navigation data and detected threat, to the intelligent communications management module 10 for use in its decision making.

The intelligent communications management module 10 is also configured to receive data from a plurality of avionics applications. Such avionics applications may, for example, comprise civil and/or military applications, such as tactical datalink applications 14, sensor applications 16 (e.g. video, images, etc), mission management applications 18 (for example, command and control data), and platform management applications 20. It will be appreciated that this is not a comprehensive list of typical or possible applications from which the intelligent communications management system may receive data and others will be apparent to a person skilled in the art, depending upon the specific application within which the present invention is to be employed.

The intelligent communications management module 10 is configured to manage multiple communications links (generally depicted in Figure 1 as 'network' 21), which may include (but are not limited to) tactical data links, satellite links, free space optical links and other data links, as will be apparent to a person skilled in the art, and it may have different antenna types (depicted generally at 22) to manage including, but not limited to, omni-directional and directional antennas, fixed or beam-steerable antennas. The antennas may be shared between communications links/radios, or with sensor systems. In the example illustrated in Figure 1, the communications from the platform antennas 22 are directed at an end user 23, for example, the remote pilot of a UAV located at a ground station. However, communications are not necessarily intended to be in any way limited in this regard.

Thus, the Intelligent Communications Management System has access to a wealth of information, such as mission environment and internal state of the node, and uses this information in its decision making. The environment represents the systems knowledge about the outside world, including network and link performance, other nodes in the network environment, dynamic threats, terrain, obstacles and weather data. The internal state is a representation of the internals of the system. It collects internal data from contributing sub-systems, such as real-time node attitude and position, current operational mode and applications' communications requirements, and it retains communications/information exchange plans, policies and information about installed resources (e.g. communications links, antennas).

A database (not shown) provides the intelligent communications management module 10 with knowledge about its mission environment and internal state, and uses this information in its decision making. The environmental data represents the system's knowledge about the outside world, including network and link performance, other nodes in the network environment, dynamic threats, terrain, obstacles and weather data. The internal state is a representation of the internal sub-systems of the system. The database collects internal data from contributing sub-systems, such as real-time node attitude and position, current operational mode and the communications requirements of individual applications, and it retains communications/information exchange plans, policies and information about installed resources (e.g. communication systems, antennas, etc). For example, the antenna gain patterns for each installed antenna on a node would be stored on each node, in a database for example, to be used by the intelligent communications management module 10 in respect of, for example, antenna selection. In this example, the antenna gain patterns are mapped with respect to the body reference frame of the node, i.e. location of the antenna on the node.

It will be appreciated that the term "database" used above, is used simply to define one or more repositories for the required data. In one exemplary embodiment, the database may be a single repository, provided on the intelligent management module 10 (or at least dedicated thereto) in which all of the aforementioned data is stored for use thereby. In other exemplary embodiments, such a single repository may be used to store only a sub-set of the data, such as policies and installed antenna performance, to be accessed as required, with data that changes dynamically during a flight or mission, such as node position and operational mode, being sent directly from a relevant part of the overall platform management system to the intelligent communications management module.

Also illustrated in Figure 1, are data inputs representative of constraints 24, platform demands, and policy 28. These factors and the manner in which data representative thereof can be obtained will be known to a person skilled in the art. The policy 28, for example, may be designed by the network designer. A copy of this policy may reside within the intelligent management module 10, or accessible thereby. The policy contains a set of rules that, for example, define how links and antennas can be used, what action to take in the event of a hardware fault and/or loss of signal, and how avionics applications can be served to support the mission. Such rules may be expressed as condition-action pairs (i.e. IF condition THEN action) and/or in look-up tables.

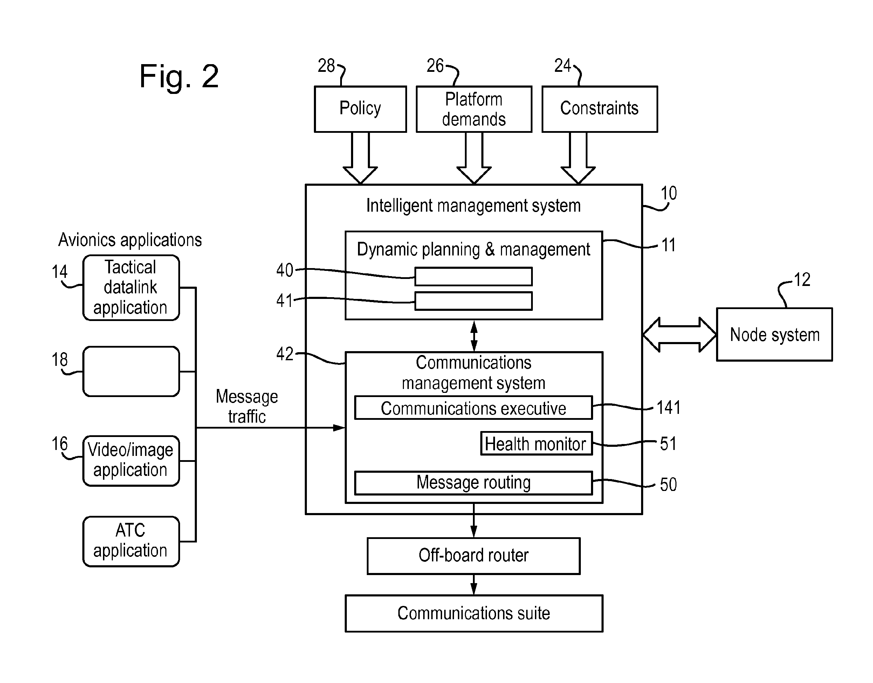

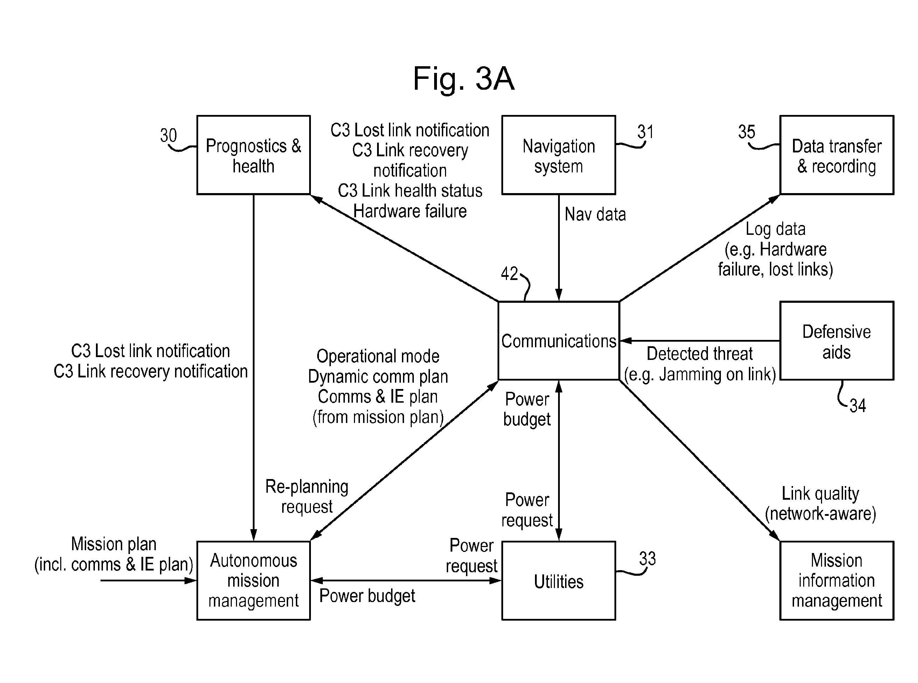

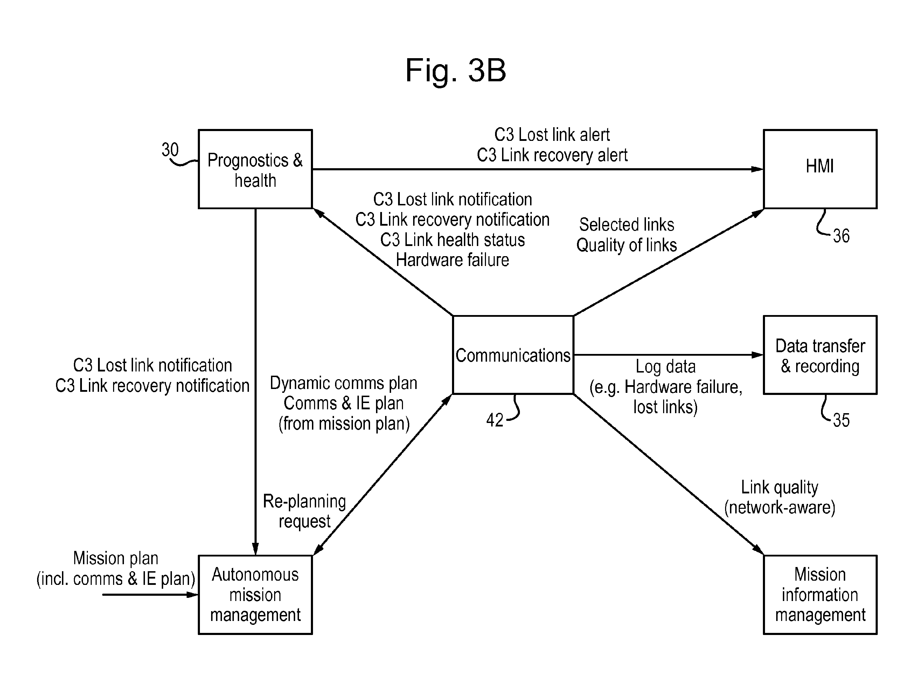

Thus, the Intelligent Communications Management System can be divided into two distinct parts with inputs and outputs to each other and other parts of the aircraft or ground-based system, as shown in Figure 2. These two distinct parts may reside in different parts of the aircraft or ground-based system, as shown in Figures 3A and 3B. Such an implementation is more applicable to Unmanned Air Systems (UAS). In another implementation, the different functions may reside in one box; this implementation may be appropriate for manned systems, such as a manned air vehicle.

Referring now to Figure 2 of the drawings, the intelligent management module 10 comprises a dynamic planning and management module 11 and a communications management system 42. The communications management system 42 is concerned with low-level decision making, and when it is unable to resolve certain communications issues, it may be configured to invoke higher level communications planning to meet platform demands.

In the example shown, the dynamic planning and management module 11 comprises a dynamic planner 40 and a manager 41, that provides an interface between the dynamic planner 40 and the communications management system 42.

In exemplary embodiments of the present invention (and as illustrated in Figures 2, 3A and 3B of the drawings), at least parts of the node system 12 are communicably coupled to the communications management system 42 and the intelligent communications management system 10 works cooperatively with the rest of the platform systems/subsystems to achieve the mission goal: to provide information for situational awareness and safety purposes, and to receive information used in its decision making. Figures 3A and 3B depict schematically this interaction for air-based systems and ground-based systems/airborne control station respectively. As explained above, the node system 12 may comprise one or more of a prognostics and health system 30, a navigation system 31, a control authority 32, e.g. pilot node, a utilities management system 33, defensive aids system 34, data transfer and recording 35 system, and an HMI (Human Machine Interface) 36 system. As an example, the Health function within the UAV Communications function provides C2 health status updates to the node's Prognostics and Health function. If a C2 Lost Link is detected by the intelligent management system's Health function, it will send a C2 Lost Link alert message to Prognostics and Health function, for it to take the appropriate action; for a UAV, the Prognostics and Health function notifies Mission Management and/or Airspace Integration of the C2 Lost Link, while for a UCS, it reports the C2 Lost Link to the HMI (intended for the pilot).

It can be seen from Figure 3 of the drawings, that the communications management module 42 receives a large quantity of different information from parts of the node, which it can use in its decision-making processes. It is consequently mission-, motion-, and network-aware and understands what resources it has to manage, as well as their performance capability. Mission-awareness provides the communications management module 42 with information on what the system is trying to achieve. There can be various mission modes, that might include surveillance, under attack, attack, taxiing, landing, etc. This is common to the entire platform. The module 42 monitors and evaluates current network performance, so it is network-aware. Motion-awareness enables the module 42 to intelligently route information along the best path to ensure connectivity to a fixed and/or mobile node is maintained, for example, in response to an unexpected and possibly a sharp manoeuvre. It is aware of other platform demands, such as emission demands. It is thus, mission-, network-, motion- and platform-aware, enabling the communications management module 42 to dynamically adapt and respond to unexpected events, e.g. change in mission priorities, mission environment and network conditions.

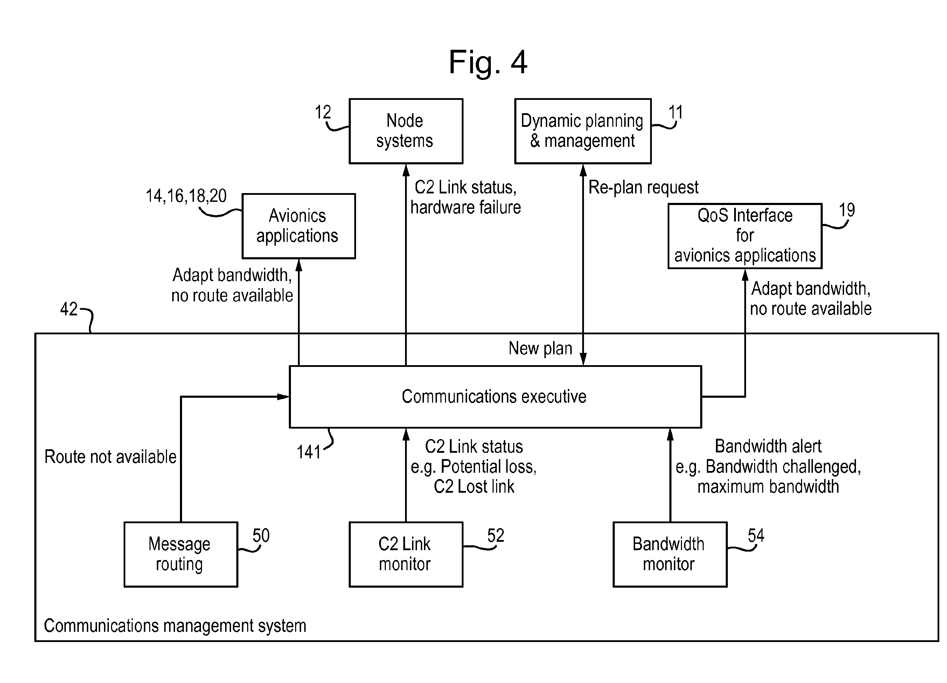

Referring to Figure 4 of the drawings, in one exemplary implementation of a system including apparatus according to an exemplary embodiment of the present invention, a Communications Executive function 141 is provided within the communications management system 42 to enable it to interface with components internal and external to the communications management system 42. Internal components of the communications management system 42 include a message routing module 50, a C2 (command and control) monitor 52 and a bandwidth monitor 54, wherein the message routing function 50, the C2 monitor 52 and the bandwidth monitor 54 may, collectively or independently, for (at least part of) a health monitor 51 according to an exemplary embodiment of the present invention. The Communications Executive function 141 is configured to manage plan requests, receive new plans, work with avionics applications 14, 16, 18, 20 and/or a QoS interface 19 for avionics applications, (in the context of the present invention) receive health reports and report health issues that may have an impact on a mission. In general, if the communications management module 42 cannot adapt to meet current platform demands using integrated low-level planning functionality, then higher-level planning is invoked.

Aspects of the present invention provide an apparatus and method for monitoring the health of its off-board communications and communications equipment and then reporting the health data to the relevant aircraft or ground-based systems.

The health function comprises a monitor unit with inputs from the wireless communications links and an output to the aircraft or ground-based systems/subsystems. The health monitor gathers information regarding the health of the communications equipment and communications links, evaluates the received data, provides up-to-date information on health of communications links and communications equipment to the designated platform systems/subsystems, identifies when a contingency arises and as a result generates a response to the designated platform systems/subsystems.

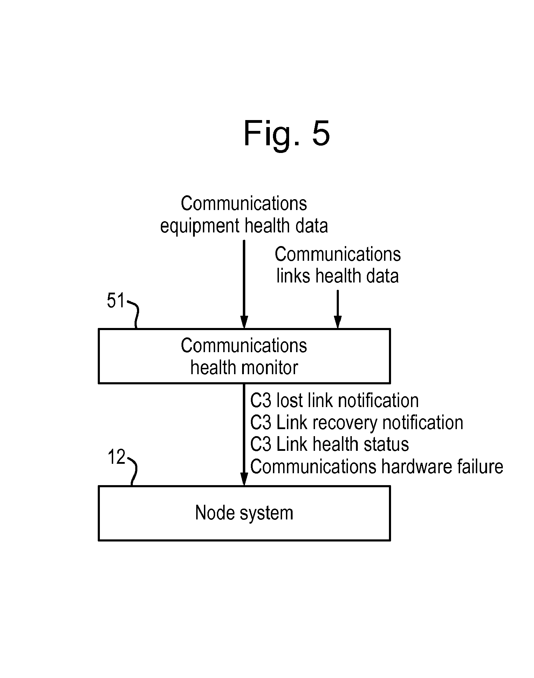

Referring to Figure 5 of the drawings, the health function will report to those stakeholders as specified in the policy of any faults with regards to the communications equipment e.g. hardware fault with Link 1. The stakeholders can be the platform system(s)/subsystem(s), such as the mission management system, airspace integration, prognostics & health system, and data logger system. For a ground- and airborne control based infrastructure, the pilot will also be informed, either directly or indirectly via an interface (e.g. Human Machine Interface).

The health function will monitor the health of all connections (e.g. satellite link and MIDS) and monitor the health of the C2 link. It will report the health status, of all links or a subset of, to those stakeholders as specified in the policy. For example, the pilot on the ground station may require health updates about all links, while the mission management system may only be interested in a subset of those links, such as the C2 and satellite link.

The health function will alert the relevant stakeholders when the C2 link has been lost. The loss of the C2 link will be reported when the lost link window expires. The lost link window is an interval of time during which the C2 link must be re-established, i.e. recovery period.

When the C2 link has been lost for a time period greater or equal to the lost link window, the health function will report the loss to the stakeholders, for the appropriate action to be taken. If the C2 link is re-established after the lost link window expires, the health function will inform the stakeholders.

It may be desirable to report the loss of the C2 link as soon as the loss has been detected, for situational awareness. A minimum lost link interval may be defined to represent a potential loss. For example, C2 lost link is reported after 30 seconds (minimum interval) of detected inactivity. The stakeholders would then be alerted to a potential loss. If the C2 link is re-established any time between the minimum interval and the (maximum) lost link window, the health function will report the recovery of the C2 link to those stakeholders.

The C2 communications link may also exhibit intermittent communications (i.e. lost-recovered-lost-recovered etc.). The health monitoring function may also identify this characteristic and report this to the predetermined stakeholders, for the appropriate action to be taken.

A C2 link may also become degraded during a mission. If the performance of the communications link falls below an acceptable threshold, then a time counter is triggered. If the performance of the C2 link does not return to normal operation (i.e. operate above an acceptable threshold) within a predetermined time period, then a lost link is reported to the stakeholders.

The lost link window parameter is set by the Civil Aviation Authority (CAA) and/or Military Aviation Authority (MAA). The health function will use policy pertaining to C2 lost link to determine the action(s) to be taken.

It will be apparent to a person skilled in the art, from the foregoing description, that modifications and variations can be made to the described embodiments without departing from the scope of the present invention as defined by the appended claims.

## Claims

1. Health monitoring apparatus for a communications system of a platform comprising a plurality of systems and/or functions and at least one platform application, said communications system being configured to transmit and/or receive data and to effect wireless data communication by means of one of a plurality of supported communication links, wherein said health monitoring apparatus is configured to:
- receive health data from one or more of said communications links, said health data being representative of a current status of respective said one or more of said communications links;
- monitor said received health data for data indicative of one or more predetermined conditions;
- in the event that a predetermined condition is identified, generate report data representative of said predetermined condition; and
- provide said report data to one or more predefined recipients associated with said platform.

2. Apparatus according to claim 1, further configured to use said health data to generate health reports, and provide said health reports periodically to one or more predefined recipients associated with said platform.

3. Apparatus according to claim 1 or claim 2, wherein said current status of a communications link comprises a current quality and/or a current health status of communications equipment associated with said platform and/or said communications link.

4. Apparatus according to any of the preceding claims, wherein said predetermined condition comprises a potential or confirmed lost and/or degraded command and control (C2) link, and said report data includes data indicative of said potential or confirmed lost link.

5. Apparatus according to any of the preceding claims, wherein said report data includes data representative of a recovered command and control (C2) link.

6. Apparatus according to any of the preceding claims, wherein said predetermined condition comprises intermittent connectivity for command and control (C2) communications, and said report data includes data indicative of said intermittent connectivity.

7. Apparatus according to any of the preceding claims, comprising a link monitoring module configured to monitor a quality of at least one specified communications link and generate report data if said specified communications link is determined to be lost and/or degraded for a predetermined period of time.

8. Apparatus according to any of the preceding claims, configured to use a set of rules or policy to determine, in response to said received health data, an action to be taken in respect of a communications link and/or communications equipment associated therewith.

9. Apparatus according to any of the preceding claims, comprising a message routing module configured to route messages for off-board transmission via one or more communications links, and generate report data if it determines that there are no adequate communications links available for such off-board transmission.

10. Apparatus according to claim 8, wherein said message routing module is configured to generate report data if it determines that there are no adequate communications links for off-board transmission of messages categorised as safety-critical and/or mission-critical.

11. Apparatus according to any of the preceding claims, configured to transmit said report data to a Human Machine Interface (HMI) system of said moving platform and/or one or more systems associated with said platform.

12. A management system for a moving platform comprising a plurality of systems and/or functions and at least one platform application, and a communications system configured to transmit and/or receive data and to effect wireless data communication by means of one of a plurality of supported communication links, the system further comprising health monitoring apparatus configured to:
- receive health data from one or more of said communications links, said health data being representative of a current status of respective said one or more of said communications links;
- monitor said received health data for data indicative of one or more predetermined conditions;
- in the event that a predetermined condition is identified, generate report data representative of said predetermined condition; and
- provide said report data to one or more predefined recipients associated with said platform.

13. A health monitoring method for use with a communications system of a platform comprising a plurality of systems and/or functions and at least one platform application, said communications system being configured to transmit and/or receive data and to effect wireless data communication by means of one of a plurality of supported communication links, wherein said health monitoring method comprises:
- receiving health data from one or more of said communications links, said health data being representative of a current status of respective said one or more of said communications links;
- monitoring said received health data for data indicative of one or more predetermined conditions;
- in the event that a predetermined condition is identified, generating report data representative of said predetermined condition; and
- provide said report data to one or more predefined recipients associated with said platform.
